(19) Europäisches Patentamt
European Patent Office
Office européen des brevets

(11) **EP 4 075 545 A1**

(12) **EUROPEAN PATENT APPLICATION**
published in accordance with Art. 153(4) EPC

(43) Date of publication:
**19.10.2022 Bulletin 2022/42**

(21) Application number: **20899052.3**

(22) Date of filing: **01.12.2020**

(51) International Patent Classification (IPC):
***H01M 4/134*** *(2010.01)* ***H01M 4/36*** *(2006.01)*
***H01M 4/38*** *(2006.01)* ***H01M 10/052*** *(2010.01)*
***H01M 10/0567*** *(2010.01)*

(52) Cooperative Patent Classification (CPC):
**H01M 4/134; H01M 4/36; H01M 4/38;**
**H01M 10/052; H01M 10/0567;** Y02E 60/10

(86) International application number:
**PCT/JP2020/044687**

(87) International publication number:
**WO 2021/117549 (17.06.2021 Gazette 2021/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.12.2019 JP 2019225914**

(71) Applicant: **Panasonic Intellectual Property Management Co., Ltd.**
**Osaka-shi, Osaka 540-6207 (JP)**

(72) Inventors:
- **FUJITOMO Chisaki**
  **Osaka 540-6207 (JP)**
- **ISHIGURO Tasuku**
  **Osaka 540-6207 (JP)**
- **NAMBUYA Shunsuke**
  **Osaka 540-6207 (JP)**

(74) Representative: **Novagraaf International SA**
**Chemin de l'Echo 3**
**1213 Onex, Geneva (CH)**

# (54) NON-AQUEOUS ELECTROLYTE SECONDARY BATTERY

(57) A nonaqueous electrolyte secondary battery includes a positive electrode, a negative electrode, and a nonaqueous electrolyte, wherein the negative electrode includes a negative electrode current collector, and a negative electrode active material layer supported by the negative electrode current collector and containing a silicon material as a negative electrode active material; when dividing the negative electrode active material layer into two layers of a first region and a second region having the same thickness, the second region is closer to the negative electrode current collector than the first region; the silicon material is contained in the first region more than the second region; and the nonaqueous electrolyte includes at least one additive selected from the group consisting of a sulfite compound and a sulfate compound.

[FIG. 2]

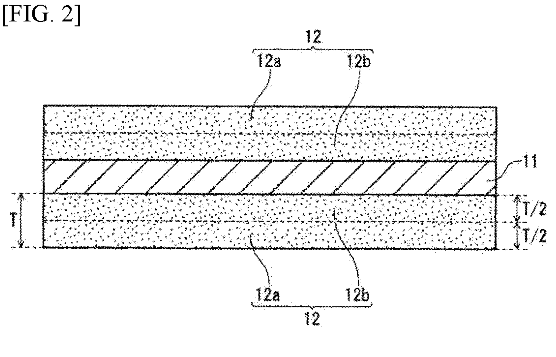


EP 4 075 545 A1

## Description

[Technical Field]

The present disclosure relates to a nonaqueous electrolyte secondary battery.

[Background Art]

Nonaqueous electrolyte secondary batteries, particularly lithium-ion secondary batteries, are expected as a power source for small consumer applications, power storage devices, and electric vehicles, because of their high voltage and high energy density. With the demand for batteries with high energy density, a negative electrode active material (silicon material) containing silicon with a high theoretical capacity density has been examined (e.g., Patent Literature 1).

When lithium ions are absorbed in the silicon material during charging, the silicon material expands, and the resulting stresses push out the nonaqueous electrolyte contained in the negative electrode. During discharging, the silicon material shrinks due to the release of lithium ions from the silicon material, and the above stress is relaxed, but the affinity between the nonaqueous electrolyte and the negative electrode surface is low, and therefore the nonaqueous electrolyte hardly penetrates into the negative electrode active material layer. Therefore, with repetition of charging and discharging, the negative electrode current collector side of the negative electrode active material layer suffers from insufficient nonaqueous electrolyte, and the nonaqueous electrolyte in the negative electrode active material layer tends to be non-homogeneous.

[Citation List]

[Patent Literature]

Patent Literature 1: Japanese Laid-open Patent Publication 2015-69760

[Summary of Invention]

As a method of suppressing the non-homogeneity of the above nonaqueous electrolyte, a conceivable method can be increasing the presence ratio of the silicon material in the negative electrode active material layer on the negative electrode surface side than on the negative electrode current collector side. In the above method, the unevenness of the negative electrode (negative electrode active material layer) surface is promoted with repeated charging and discharging, thereby improving the affinity between the nonaqueous electrolyte and the negative electrode surface and facilitating penetration of the nonaqueous electrolyte into the negative electrode active material layer.

However, in the negative electrode active material layer (particularly, on the negative electrode surface side) in which the nonaqueous electrolyte easily permeates, the silicon material and the nonaqueous electrolyte tend to come into contact with each other to cause side reactions, and the nonaqueous electrolyte is easily decomposed on the particle surface of the silicon material to form a coating. In addition, the above coating is broken together with the expansion and contraction, and the particle cracking of the silicon material during charging and discharging, and the active surface of the silicon material is exposed and contacted with the nonaqueous electrolyte, and the coating is formed by the decomposition of the nonaqueous electrolyte at the active surface. As the coating is formed, the negative electrode resistance tends to increase and the capacity tends to decrease at the initial stage of cycle. The above problems become more significant when there is a large percentage of silicon material present on the negative electrode surface side.

In view of the above, one aspect of the present disclosure relates to a nonaqueous electrolyte secondary battery including a positive electrode, the above-discussed negative electrode, and a nonaqueous electrolyte; the negative electrode includes a negative electrode current collector and a negative electrode active material layer supported by the negative electrode current collector and containing a silicon material as a negative electrode active material; when dividing the negative electrode active material layer into two layers of a first region and a second region having the same thickness, the second region is closer to the negative electrode current collector than the first region; the silicon material is contained in the first region more than the second region; and the nonaqueous electrolyte includes at least one additive selected from the group consisting of a sulfite compound and a sulfate compound.

According to the present disclosure, a nonaqueous electrolyte secondary battery excellent in initial cycle characteristics can be obtained.

[Brief Description of Drawings]

[FIG. 1] FIG. 1 is a schematic perspective partially cutaway view of a nonaqueous electrolyte secondary battery according to an embodiment of the present disclosure.

[FIG. 2] FIG. 2 is a schematic cross-sectional view of a negative electrode used in the nonaqueous electrolyte secondary battery of FIG. 1.

[Description of Embodiments]

A nonaqueous electrolyte secondary battery according to an embodiment of the present disclosure includes a positive electrode, a negative electrode, and a nonaqueous electrolyte.

The negative electrode includes a negative electrode current collector and a negative electrode active material layer supported by the negative electrode current collector and containing a negative electrode active material. The negative electrode active material includes at least a silicon material and may further include a carbon material. When the negative electrode active material layer is divided into two layers of a first region and a second region having the same thickness, the second region is closer to the negative electrode current collector than the first region, and the silicon material is more contained in the first region than in the second region. The nonaqueous electrolyte includes at least one additive selected from the group consisting of a sulfite compound and a sulfate compound.

When more silicon material is contained in the first region (upper layer) than in the second region (i.e., the lower layer based on the negative electrode current collector), the negative electrode (negative electrode active material layer) surface becomes uneven as the charging and discharging are repeated. Due to the progress of unevenness on the negative electrode surface, the nonaqueous electrolyte tends to penetrate into the negative electrode active material layer, thereby facilitating the progress of the battery reaction, and, for example, high rate characteristics (e.g., cycle characteristics when charging is performed at a high rate) are improved.

Presumably, the above-mentioned unevenness is contributed by the balancing of the stresses generated by the expansion of the silicon material during charging between the inside portion and the surface portion of the negative electrode active material layer. In addition, also presumably, another factor of the above-mentioned unevenness is that since a large amount of hard silicon material is present on the surface of the negative electrode active material layer, the periphery of the silicon material is susceptible to the above-mentioned effects of the stresses.

The above additive may form a low-resistance and stable coating (solid-electrolyte interface) on the surface of the negative electrode active material. Since the above additive has a relatively high reduction potential, a low-resistance coating derived from the additive is preferentially formed on the surface of the negative electrode active material layer (particularly, an upper layer thereof), in which the negative electrode active material and the nonaqueous electrolyte are easily contacted at the initial stage of the cycle.

In addition, the coating derived from the additive has excellent durability (strength) and is also excellent in followability (flexibility) against expansion and contraction of the negative electrode active material. Therefore, the breakage of the coating due to expansion/contraction and particle cracking of the negative electrode active material during charging and discharging is suppressed. By suppressing the breakage of the coating, the exposure of the active surface of the negative electrode active material is suppressed, and the contact between the active surface and the nonaqueous electrolyte and the accompanying excessive coating formation (restoration of the coating) are suppressed.

Based on the above, the reduction in capacity in initial cycles due to the increase in negative electrode resistance associated with coating formation is suppressed. Initial cycles may range, for example, from several cycles or more to 30 cycles or less. In addition, repeated breakage and restoration of the coating due to repetition of charging and discharging are suppressed, and the mid-cycle characteristics are also improved. The mid-cycle ranges, for example, from more than 30 cycles to 300 cycles or less.

In view of forming a good quality coating, the nonaqueous electrolyte may include vinylene carbonate (VC), fluoroethylene carbonate (FEC), and the like together with the additive described above.

Generally, some components of the nonaqueous electrolyte are utilized for early coating formation and also for restoration of the broken coating with repeated charge and discharge. Examples of such components include VC and FEC. However, when breakage of the coating due to expansion and contraction of the negative electrode active material tends to occur, the amount of components utilized for restoration of the coating increases and the coating resistance increases, and the initial cycle characteristics may decrease.

On the other hand, in the present disclosure, the above additive is included in the nonaqueous electrolyte. Since the additive has a high reduction potential, a coating derived from the additive is preferentially formed. Coatings derived from other components are mainly formed on top of the coatings derived from the additive and may function as part of the coatings. Since the coating derived from the additive is hard to be destroyed, the restoration of the coating by other components is suppressed, and the decrease in the initial cycle characteristics due to the increase in the coating resistance accompanying the restoration of the coating is suppressed.

As the additive of the nonaqueous electrolyte, at least one of a sulfite compound and a sulfate compound is used. The sulfite compound is an organic compound (sulfite diester compound) having a structure of -O-S (= O)-O- in

the molecule. The sulfate compound is an organic compound (sulfate diester compound) having a structure of-O-S (= O)$_2$-O-in its molecule. The molecular structure of the sulfite compound and the sulfate compound may be chain or cyclic.

The additive is, for example, a compound represented by R-A-R'. A is -O-S(=O)-O- or -O-S(=O)$_2$-O-. R, R' are each independently a hydrocarbon group. R and R' may be bonded to form a ring. The hydrocarbon group includes an alkyl group, an alkenyl group, an aryl group, and the like. The hydrocarbon group may be linear or branched. The alkyl group includes a methyl group, an ethyl group, a n-propyl group, an isopropyl group, and the like. The alkenyl group includes a vinyl group, a 1-propenyl group, a 2-propenyl group, and the like. The aryl group includes a phenyl group, a benzyl group, and the like. At least one of the hydrogen atoms of the hydrocarbon group may be substituted with a halogen atom or the like. In view of ensuring good viscosity and improving solubility of the nonaqueous electrolyte, the hydrocarbon group is preferably an alkyl group having 1 to 5 carbon atoms, and more preferably an alkyl group having 1 to 3 carbon atoms.

Examples of the cyclic sulfite compound include the compound represented by General Formula (1) below:

[Chem. 1]

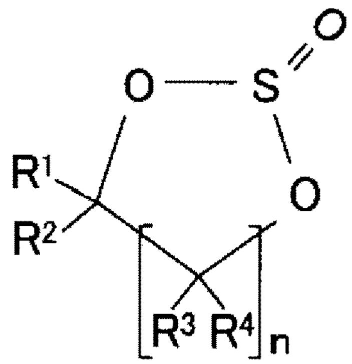

(1)

$R^1$ to $R^4$ in General Formula (1) are each independently a hydrogen atom or a substituent group. The substituent group includes a halogen atom, a hydrocarbon group, a hydroxyl group, an amino group, an ester group, and the like.

The hydrocarbon group includes an alkyl group and an alkenyl group, and the like. The alkyl group and the alkenyl group may be linear or branched. The alkyl group includes a methyl group, an ethyl group, a n-propyl group, an isopropyl group, and the like. The alkenyl group includes a vinyl group, a 1-propenyl group, a 2-propenyl group, and the like. At least one of the hydrogen atoms of the hydrocarbon group may be substituted with a halogen atom or the like. In view of ensuring good viscosity and improving solubility of the nonaqueous electrolyte, the hydrocarbon group is preferably an alkyl group having 1 to 5 carbon atoms, and more preferably an alkyl group having 1 to 3 carbon atoms.

In General Formula (1), n indicates the repeating number of methylene groups having $R^3$ and $R^4$.
"n" is an integer of 1 to 3. When n is 2 or 3, $R^3$ and $R^4$ of each methylene group may be the same or different.

Specific examples of the compound represented by General Formula (1) include ethylene sulfite (ES), 1,3-propylenesulfite, 1,2-propylenesulfite, 1,3-butylenesulfite, 1,2-butylenesulfite, 1,2-pentenesulphite, fluoro ethylene sulfite, 1,2-difluoro ethylene sulfite, and vinyl ethylene sulfite.

Examples of the chain sulfite compound include diethyl sulfite, dimethyl sulfite, dipropyl sulfite, dibutyl sulfite, dipropargyl sulfite, bis(fluoroethyl)sulfite, bis(difluoroethyl)sulfite, bis(trifluoroethyl)sulfite, bis(trimethylsilyl)sulfite, and bis(2-propenyl)sulfite.

In view of improving initial cycle characteristics and the high rate characteristics, among them, the sulfite compound is preferably ES. With ES, steric hindrance in the molecule occurs less, and the reaction of ES-derived coating formation proceed smoothly on the negative electrode active material surface. Further, ES is also advantageous for an ES-derived coating formation in that the reduction potential is suitably high and the viscosity is suitably low. A kind of sulfite compound may be used singly, or two or more kinds may be used in combination.

Examples of the cyclic sulfate compound include a compound represented by General Formula (2) below:

[Chem. 2]

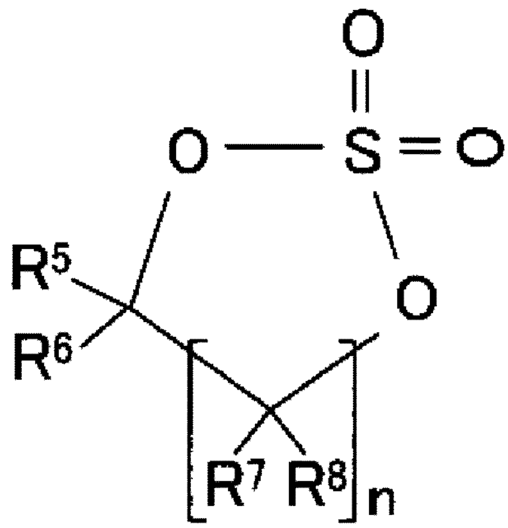

(2)

$R^5$ to $R^8$ and n in General Formula (2) are the same as $R^1$ to $R^4$ and n in General Formula (1).

Specific examples of the compound represented by General Formula (2) include ethylene sulfate (DTD), 1,3-propylenesulfate, 1,2-propylenesulfate, 1,3-butylenesulfate, 1,2-butylenesulfate, 1,2-pentenesulfate, fluoro ethylene sulfate, 1,2-difluoro ethylene sulfate, and vinyl ethylene sulfate.

Examples of the chain sulfate compound include diethyl sulfate, dimethyl sulfate, dipropyl sulfate, dibutyl sulfate, dipropargyl sulfate, bis(fluoroethyl) sulfate, bis(difluoroethyl) sulfate, bis(trifluoroethyl) sulfate, bis(trimethylsilyl) sulfate, and bis(2-propenyl) sulfate.

In view of improving the initial cycle characteristics and the high rate characteristics, among them, the sulfate compound is preferably DTD. With DTD, steric hindrance in the molecule occurs less, and the reaction of DTD-derived coating formation proceed smoothly on the negative electrode active material surface. Further, DTD is also advantageous for a DTD-derived coating formation in that the reduction potential is suitably high and the viscosity is suitably low. A kind of sulfate compound may be used singly, or two or more kinds may be used in combination.

The content (mass ratio relative to the entirety of the nonaqueous electrolyte) of the above additive in the nonaqueous electrolyte is preferably 2 mass% or less, more preferably 0.5 mass% or more and 2 mass% or less, and still more preferably 0.5 mass% or more and 1.5 mass% or less. Preferably, the content of the additive in the nonaqueous electrolyte is within the above range prior to the first charge of the battery (or prior to injection into the battery). When the content of the additive in the nonaqueous electrolyte is 2 mass% or less, a coating derived from the additive tends to be suitably formed, and the coating resistivity tends to be reduced. In addition, the viscosity of the nonaqueous electrolyte can be easily adjusted to a suitable viscosity when the content of the additive is 2 mass% or less. When the content of the additive in the nonaqueous electrolyte is 0.5 mass% or more, a coating derived from the additive tends to be sufficiently formed. The content of the additive in the nonaqueous electrolyte is determined, for example, by gas chromatography-mass spectrometry (GC/MS).

In the course of charging and discharging, at least a portion of the additive decomposes and is utilized for forming a coating. Therefore, in a battery after charging and discharging (for example, a battery in an initial period, after charging and discharging several times), the content of the additive in the nonaqueous electrolyte may be less than 2 mass%. When the content of the additive in the preparation of the nonaqueous electrolyte is 2 mass% or less, the content of the additive in the nonaqueous electrolyte, for example, in a battery after initial charge (e.g., a commercially available battery), may be, for example, 100 ppm or less. The content of the additive contained in the nonaqueous electrolyte removed from the battery may be a trace amount close to the detection limit. If the presence of the additive can be confirmed, corresponding improvement effects in the initial cycle characteristics and high rate characteristics can be observed.

When a larger amount of silicon material is contained in the first region than in the second region, the nonaqueous electrolyte permeability into the negative electrode active material layer is improved, the utilization rate of the negative electrode active material layer is increased, and the high rate characteristics and the like are improved. The silicon material may not be included in the second region. In this case, a carbon material may be contained in the second region. The first region and the second region may each contain a plurality of types of silicon material, and the first region may contain a plurality of types of silicon material in a larger amount than in the second region.

The ratio M2/M1 of the content M2 of the silicon material in the second region to the content M1 of the silicon material in the first region is 0 or more and less than 1. In view of improving the nonaqueous electrolyte permeability into the negative electrode active material layer and increasing the capacity, M2/M1 is preferably 0.3 or more and 0.9

or less, and more preferably 0.5 or more and 0.9 or less.

The above M2/M1 can be obtained, for example, by the following method.

Cross sections of the negative electrode active material layer are observed by scanning electron microscopy (SEM) and quantitatively mapped by energy-dispersive X-ray (EDX) analysis. Thereby, the element content of the negative electrode active material layer is measured for each scanning position of the cross section, and the element distribution is obtained. In one region of the cross section, the Si content in the region is obtained by, for example, integrating Si element distribution.

Based on the above method, the Si content $M1_{Si}$ of the first region and the Si content $M2_{Si}$ of the second region in the cross section of the negative electrode active material layer are obtained, and $M2_{Si}/M1_{Si}$ is calculated. If the silicon material of the first region and the silicon material of the second region of are of the same composition (e.g., if the first region and the second region contain $SiO_x$, so long as x-value do not differ in the first region and the second region), $M2_{Si}/M1_{Si}$ can be determined as a M2/M1.

Examples of the silicon material include elemental silicon, silicon alloys, composite materials containing silicon, and the like.

Preferably, the composite material includes a lithium ion conductive phase (matrix phase) and silicon particles (fine Si phase) dispersed in the lithium ion conductive phase, wherein lithium ion conductive phase includes at least one selected from the group consisting of a $SiO_2$ phase, a silicate phase, and a carbon phase. The composite material is advantageous in improving the cycle characteristics because the lithium ion conductive phase relaxes the stresses caused by the expansion and contraction of silicon particles during charging and discharging.

The $SiO_2$ phase is an amorphous phase containing 95 mass% or more silicon dioxide. The $SiO_2$ phase absorbs lithium ions by initial charge, and a $Li_4SiO_4$ phase is easily formed. The composite material in which silicon particles are dispersed in the $SiO_2$ phase is represented by $SiO_x$, where x is, for example, $0.5 \le x < 2$, and preferably $0.8 \le x \le 1.6$. $SiO_x$ is obtained, for example, by heat-treating silicon monoxide and separating it into a $SiO_2$ phase and a fine Si phase by disproportionation. Observing the cross section of $SiO_x$ particles using transmission electron microscopy (TEM), the Si particles dispersed in the $SiO_2$ phase can be recognized.

The silicate phase includes, for example, at least one of alkali-metal elements (group 1 elements other than hydrogen in a long period type periodic table) and group 2 elements in a long period type periodic table. The alkali metal elements include lithium (Li), potassium (K), sodium (Na), and the like. The group 2 elements include magnesium (Mg), calcium (Ca), strontium (Sr), barium (Ba), and the like. The silicate phase including lithium may have a composition represented by the formula: $Li_{2z}SiO_{2+z}$ ($0 < z < 2$).

z may be 1/2 or may be 1. A composite material in which silicon particles are dispersed in a silicate phase can be obtained, for example, by pulverizing a mixture of silicate and a raw material silicon with stirring in a ball mill or the like to make fine particles, and then subjecting the mixture to heat treatment in an inert atmosphere.

The carbon phase includes, for example, amorphous carbon which is less crystalline. The amorphous carbon may be, for example, graphitizable carbon (hard carbon) or non-graphitizable carbon (soft carbon). A composite material in which silicon particles are dispersed in a carbon phase can be obtained, for example, by pulverizing a mixture of a carbon source and a raw material silicon with stirring in a ball mill or the like to make fine particles, and then subjecting the mixture to heat treatment in an inert atmosphere. For example, a saccharide such as carboxy methylcellulose (CMC) or a water-soluble resin such as polyvinylpyrrolidone is used as the carbon source.

The silicon alloy includes, for example, silicon (Si), and at least one element selected from the group consisting of tin (Sn), nickel (Ni), iron (Fe), copper (Cu), titanium (Ti), manganese (Mn), and aluminum (Al).

The compositions of the silicon material are determined, for example, by obtaining a reflected electron image of a cross section of the negative electrode active material layer by field emission scanning electron microscopy (FE-SEM), observing particles of the silicon material, and performing elemental analyses on the observed particles of the silicon material. For the element analysis, for example, analysis by an electron beam microanalyzer (EPMA), Auger electron spectroscopy (AES) analysis, or the like is used. When the silicon material is a composite material, the composition of the lithium ion conductive phase can also be determined by the analysis exemplified above.

The silicon material is, for example, a particulate material. The average particle size (D50) of the silicon material particles is, for example, 1 μm or more and 25 μm or less, and preferably 4 μm or more and 15 μm or less. In the above particle size range, excellent battery performance can be easily obtained. In the present specification, the average particle size (D50) means a particle size (volume average particle size) having a volume integrated value of 50% in the particle size distribution measured by the laser diffraction scattering method. For example, "LA-750" manufactured by Horiba Corporation can be used as the measuring device.

In view of improving conductivity, at least a part of the surfaces of composite material particles may be coated with a conductive layer. The conductive layer includes a conductive material such as conductive carbon. The conductive layer is coated, for example, in an amount of 1 part by mass or more and 10 parts by mass or less per 100 parts by mass of a total of the composite material particles and the conductive layer. The composite material particles having a conductive layer on their surfaces are obtained, for example, by mixing coal-pitch or the like with the composite material

particles and heat-treating the mixture in an inert atmosphere.

A negative electrode provided with a negative electrode active material layer containing a larger amount of silicon material in the first region than the second region can be produced, for example, by the following method.

A first negative electrode slurry and a second negative electrode slurry are prepared. At this time, the first negative electrode slurry is allowed to contain more silicon material than in the second negative electrode slurry. A second negative electrode slurry is applied over the negative electrode current collector, the second coating film is dried, the first negative electrode slurry is applied over the second coating film, and the first coating film is dried. The laminate of the first coating film and second coating film may be rolled after drying. In this way, the second negative electrode active material layer on the negative electrode current collector, the first negative electrode active material layer containing more silicon material than the second negative electrode active material layer are formed in this order. The second coating film may be dried together with the first coating film after applying the first negative electrode slurry on the second coating film. The first negative electrode active material layer and the second negative electrode active material layer may have the same thickness, in which case the first negative electrode active material layer and the second negative electrode active material layer correspond to the first region and the second region, respectively. The value of M2/M1 may be controlled by changing the ratio of the thickness of the first negative electrode active material layer to the thickness of the second negative electrode active material layer.

The negative electrode active material layer may be configured by stacking a plurality of layers of 3 or more having a different silicon material content from each other so that the amount of silicon material is sequentially increased from the negative electrode current collector side toward the negative electrode surface side. Such a negative electrode active material layer can be formed, for example, by preparing tree or more types of negative electrode slurries having a different silicon material content from each other, and applying the negative electrode slurries to the negative electrode current collector in order from a negative electrode slurry having a small silicon material content. When such a negative electrode active material layer is divided into the first region and the second region, a larger amount of silicon material is contained in the first region than in the second region.

Next, a nonaqueous electrolyte secondary battery of this embodiment is explained in detail. The nonaqueous electrolyte secondary battery includes, for example, a negative electrode such as below, a positive electrode, and a nonaqueous electrolyte.

[Negative Electrode]

The negative electrode includes a negative electrode current collector, and a negative electrode active material layer supported by the negative electrode current collector surface. The negative electrode active material layer can be formed, for example, by coating a negative electrode slurry in which a negative electrode mixture is dispersed in a dispersion medium on a surface of the negative electrode current collector and drying the slurry. The dried coating film may be rolled, if necessary. The negative electrode active material layer may be formed on one surface of a sheet-form negative electrode current collector or may be formed on both surfaces. The negative electrode mixture contains a negative electrode active material (silicon material) as an essential component, and may contain a binder, a conductive agent, a thickener, and the like as an optional component.

The negative electrode active material may further include a carbon material that electrochemically absorbs and releases lithium ions. A carbon material may be contained in the first region and the second region. By further using a carbon material having a degree of expansion and contraction during charge and discharge smaller than that of the silicon material, it is easy to maintain good contacts between the negative electrode active material layer and the negative electrode current collector during charge and discharge. When the silicon material and carbon materials are used in combination, a high capacity and excellent cycle characteristics are easily obtained in a well-balanced manner. The average particle size (D50) of the carbon materials is, for example, 1 μm or more and 30 μm or less.

In view of increasing the capacity, the ratio of the carbon material to the sum of silicon material and the carbon material is preferably 98 mass% or less, more preferably 95 mass% or less. In view of improving the cycle characteristics, the ratio of the carbon material to the sum of the silicon material and the carbon material is preferably 70 mass% or more, more preferably 75 mass% or more.

Examples of the carbon material include graphite, soft carbon, hard carbon, and the like. Preferred among them is graphite, which is excellent in stability during charging and discharging and has small irreversible capacity. Graphite means a material having a graphite type crystal structure, and includes, for example, natural graphite, artificial graphite, graphitized mesophase carbon particles, and the like. A kind of carbon material may be used singly, or two or more kinds may be used in combination.

Examples of the binding agent include resin materials, for example, fluorine resins, such as polytetrafluoroethylene and polyvinylidene fluoride (PVDF); polyolefin resins, such as polyethylene and polypropylene; polyamide resins, such as aramid resins; polyimide resins, such as polyimide and polyamideimide; acrylic resins, such as polyacrylic acid, methyl polyacrylate, and ethylene-acrylic acid copolymers; vinyl resins, such as polyvinyl acetate; rubber materials, such

as styrene-butadiene copolymer rubber (SBR), and the like. A kind of binder may be used singly, or two or more kinds thereof may be used in combination.

Examples of the conductive agent include carbon such as acetylene black, conductive fibers such as carbon fibers and metal fibers, and powders of metal such as aluminum. A kind of conductive agent may be used singly, or two or more kinds thereof may be used in combination.

Examples of the thickener include carboxy methylcellulose (CMC) and a modified product thereof (also including salts such as Na salts), and cellulose derivatives such as methylcellulose (cellulose ether and the like). A kind of thickener may be used singly, or two or more kinds thereof may be used in combination.

The dispersion medium is not particularly limited, and for example, water, an alcohol such as ethanol, ether such as tetrahydrofuran, an amide such as dimethylformamide, N-methyl-2-pyrrolidone (NMP), or a mixture solvent thereof is used.

As the negative electrode current collector, a non-porous conductive substrate (metal foil, etc.), and a porous conductive substrate (mesh-body, net-body, punched sheet, etc.) are used. For the material of the negative electrode current collector, stainless steel, nickel, nickel alloy, copper, copper alloy or the like can be exemplified. The thickness of the negative electrode current collector is not particularly limited, but is preferably 1 to 50 $\mu$m, and more preferably 5 to 20 $\mu$m.

[Positive Electrode]

The positive electrode includes, for example, a positive electrode current collector, and a positive electrode mixture layer supported by the surface of the positive electrode current collector. The positive electrode mixture layer can be formed, for example, by applying a positive electrode slurry in which a positive electrode mixture is dispersed in a dispersion medium on a surface of the positive electrode current collector and drying the slurry. The dried coating film may be rolled, if necessary. The positive electrode mixture layers may be formed on one or both surfaces of the sheet-form positive electrode current collector. The positive electrode mixture contains a positive electrode active material as an essential component, and may contain a binder, a conductive agent, and the like as an optional component. As a dispersing medium for the positive electrode slurry, NMP or the like is used.

As the positive electrode active material, for example, a composite oxide containing lithium and a transition metal is used. Examples of the transition metal includes Ni, Co, and Mn. Examples of the composite oxide containing lithium and a transition metal include $Li_aCoO_2$, $Li_aNiO_2$, $Li_aMnO_2$, $Li_aCO_bNi_{1-b}O_2$, $Li_aCo_bMe_{1-b}O_c$, $Li_aNi_{1-b}Me_bO_c$, $Li_aMn_2O_4$, $Li_aMn_{2-b}Me_bO_4$, $LiMePO_4$, and $Li_2MePO_4F$ (Me is at least one selected from the group consisting of Na, Mg, Sc, Y, Mn, Fe, Co, Ni, Cu, Zn, Al, Cr, Pb, Sb, and B). Here, a = 0 to 1.2, b = 0 to 0.9, and c = 2.0 to 2.3. The value "a" indicating the molar ratio of lithium is a value immediately after preparation of the active material, and increases or decreases by charging and discharging.

Among them, a lithium-nickel composite oxide represented by $Li_aNi_bMe_{1-b}O_2$ (Me is at least one selected from the group consisting of Mn, Co, and Al, $0 < a \leq 1.2$, and $0.3 \leq b \leq 1$) is preferable. In view of increasing the capacity, it is more preferable to satisfy $0.85 \leq b \leq 1$. In view of stabilization of the crystalline structure, $Li_aNi_bCo_cAl_dO_2$ containing Co and Al as Me ($0 < a \leq 1.2$, $0.85 \leq b < 1$, $0 < c < 0.15$, $0 < d \leq 0.1$, $b + c + d=1$) is more preferable.

As the binder and the conductive agent, those exemplified for the negative electrode can be used. As the conductive agent, graphite such as natural graphite or artificial graphite may be used.

The shape and thickness of the positive electrode current collector can be selected from the shapes and ranges according to the negative electrode current collector. Examples of the material for the positive electrode current collector include stainless steel, aluminum, aluminum alloy, titanium or the like.

[Nonaqueous electrolyte]

The nonaqueous electrolyte includes a nonaqueous solvent and a lithium salt dissolved in the nonaqueous solvent. The nonaqueous solvent includes at least one additive selected from the group consisting of a sulfite compound and a sulfate compound.

As the nonaqueous solvent, for example, a cyclic carbonic acid ester, a chain carbonic acid ester, a cyclic carboxylic acid ester, a chain carboxylic acid ester, or the like is used. Examples of the cyclic carbonic acid ester include propylene carbonate (PC), ethylene carbonate (EC), and the like. A cyclic carbonic acid ester having an unsaturated bond such as vinylene carbonate (VC) may also be used. A cyclic carbonic acid ester having a fluorine atom such as fluoroethylene carbonate (FEC) may also be used. Examples of the chain carbonic acid ester include diethyl carbonate (DEC), ethyl methyl carbonate (EMC), dimethyl carbonate (DMC), and the like. Examples of the cyclic carboxylic acid ester include $\gamma$-butyrolactone (GBL) and $\gamma$-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. A kind of nonaqueous solvent may be used singly, or two or more kinds thereof may

be used in combination.

Examples of the lithium-salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylates, LiCl, LiBr, LiI, borates, and imide salts. Examples of the borates include bis(1,2-benzenediolate (2-)-O, O' ) lithium borate, bis(2,3-naphthalenediolate (2-)-0, O') lithium borate, bis(2,2'-biphenyldiolate (2-)-0, O') lithium borate, and bis(5-fluoro-2-olate-1-benzenesulfonic acid-O, O') lithium borate. Examples of the imide salts include bisfluorosulfonyl imide lithium ($LiN(FSO_2)_2$), bistrifluoromethane sulfonate imide lithium ($LiN(CF_3SO_2)_2$), trifluoromethane sulfonate nonafluorobutane sulfonate imide lithium ($LiN(CF_3SO_2)(C_4F_9SO_2)$), bispentafluoroethane sulphonate imide lithium ($LiN(C_2F_5SO_2)_2$) and the like. A kind of lithium salt may be used singly, or two or more kinds thereof may be used in combination. The concentration of lithium salt in the nonaqueous electrolyte is, for example, 0.5 mol/L or more and 2 mol/L or less.

[Separator]

Usually, it is desirable to interpose a separator between the positive electrode and the negative electrode. The separator has excellent ion permeability and suitable mechanical strength and electrically insulating properties. The separator may be, for example, a microporous thin film, a woven fabric, or a nonwoven fabric. The separator is preferably made of, for example, polyolefin such as polypropylene and polyethylene.

In an example structure of the nonaqueous electrolyte secondary battery, an electrode group and a nonaqueous electrolyte are accommodated in an outer package, the electrode group having a positive electrode and a negative electrode wound with a separator. Alternatively, instead of the wound-type electrode group, other forms of electrode groups may be applied, such as a laminated electrode group in which the positive electrode and the negative electrode are laminated with a separator interposed therebetween. The nonaqueous electrolyte secondary battery may be in any form, e.g., cylindrical, prism-shaped, coin-shaped, button-shaped, laminated, etc.

FIG. 1 is a schematic perspective partially cutaway view of a nonaqueous electrolyte secondary battery according to an embodiment of the present disclosure.

The battery includes a bottomed rectangular battery case 4 and an electrode group 1 and a nonaqueous electrolyte housed in the battery case 4. The nonaqueous electrolyte includes at least one additive selected from the group consisting of a sulfite compound and a sulfate compound. The electrode group 1 has a negative electrode in the form of a long strip, a positive electrode in the form of a long strip, and a separator interposed therebetween for preventing direct contact therebetween. The electrode group 1 is formed by winding the negative electrode, the positive electrode, and the separator around a flat core and removing the core.

One end of the negative electrode lead 3 is attached to the negative electrode current collector of the negative electrode by welding or the like. The other end of the negative electrode lead 3 is electrically connected to the negative electrode terminal 6 provided in a sealing plate 5 with a resin-made insulating plate. The negative electrode terminal 6 is insulated from the sealing plate 5 by a resin gasket 7. One end of the positive electrode lead 2 is attached to the positive electrode current collector of the positive electrode by welding or the like. The other end of the positive electrode lead 2 is connected to the back surface of the sealing plate 5 via an insulating plate. That is, the positive electrode lead 2 is electrically connected to the battery case 4 which also serves as the positive electrode terminal. The insulating plate separates the electrode group 1 and the sealing plate 5 and separates the negative electrode lead 3 and the battery case 4. Periphery of the sealing plate 5 is fitted to the open end of the battery case 4, and the fitting portion is laser welded. In this manner, the opening of the battery case 4 is sealed by the sealing plate 5. The injection hole for the nonaqueous electrolyte provided in the sealing plate 5 is plugged with a sealing plug 8.

FIG. 2 is a schematic cross-sectional view of a negative electrode used in the nonaqueous electrolyte secondary battery of FIG. 1.

The negative electrode has a sheet-form negative electrode current collector 11 and a negative electrode active material layer 12 having a thickness T formed on both sides of the negative electrode current collector 11. The negative electrode active material layer 12 is divided into two layers of a first region 12a and a second region 12b having the same thickness, and the second region 12b is closer to the negative electrode current collector than the first region 12a. That is, the first region 12a and the second region 12b each has a thickness of T/2. The first region 12a is a region of a half of the negative electrode active material layer 12 on an opposite side the negative electrode current collector 11 (negative electrode surface side), and the second region 12b is a region of a half of the negative electrode active material layer 12 on the negative electrode current collector 11 side. The first region 12a contains more silicon material than the second region 12b.

The present invention will be described in detail below with reference to Examples and Comparative Examples. The present invention, however, is not limited to the following Examples.

<Example 1>

[Negative Electrode Production]

An appropriate amount of water was added to a first negative electrode mixture to obtain a first negative electrode slurry. For the first negative electrode mixture, a mixture of 100 parts by mass of a first negative electrode active material, 1 part by mass of sodium carboxy methylcellulose (CMC-Na), and 1 part by mass of styrene-butadiene rubber (SBR) was used. For the first negative electrode active material, a mixture of 8 parts by mass of a silicon material and 92 parts by mass of a carbon material was used. For the silicon material, $SiO_x$ particles (x=1, average particle size (D50) of 5 μm) whose surfaces were coated with a conductive layer containing conductive carbon was used as a composite material. The composite material surface was coated with the conductive layer an amount of 5 parts by mass per 100 parts by mass of the $SiO_x$ particles and the conductive layer in total. Graphite particles (average particle size (D50) 25 μm) were used for the carbon material.

An appropriate amount of water was added to a second negative electrode mixture to obtain a second negative electrode slurry. The amount of the second negative electrode mixture contained in the second negative electrode slurry was the same as that of the first negative electrode mixture in the first negative electrode slurry. For the second negative electrode mixture, 100 parts by mass of the second negative electrode active material, 1 part by mass of CMC-Na, and 1 part by mass of SBR were used as the mixture. For the second negative electrode active material, a mixture of 5 parts by mass of a silicon material and 95 parts by mass of a carbon material was used. For the silicon material and the carbon material of the second negative electrode active material, the same $SiO_x$ particles and graphite particles used in the first negative electrode active material were used.

The second negative electrode slurry was applied to both sides of a copper foil (thickness 10 μm) as a negative electrode current collector, and the second coating film was dried. Further, the first negative electrode slurry was applied on the second coating film formed on both surfaces of the copper foil, and the first coating film was dried. A doctor blade method was used to apply the first negative electrode slurry and the second negative electrode slurry. The amount of coating per unit area of the first negative electrode slurry and the second negative electrode slurry was set to be the same.

The dried laminate of the second coating film and the first coating film was rolled, and the second negative electrode active material layer (thickness 50 μm, density 1.5g/$cm^3$) and first negative electrode active material layer (thickness 50 μm, density 1.5g/$cm^3$) were formed on both surfaces of the copper foil in this order. In this way, the negative electrode was obtained. The thicknesses of the first negative electrode active material layer and the second negative electrode active material layer are the same, and the first negative electrode active material layer corresponds to the first region and the second negative electrode active material layer corresponds to the second region. The ratio M2/M1 of the silicon material content M2 of the second region (second negative electrode active material layer) to the silicon material content M1 in the first region (first negative electrode active material layer) was 0.63.

[Positive Electrode Production]

An appropriate amount of N-methyl-2-pyrrolidone (NMP) was added to the positive electrode mixture to obtain a positive electrode slurry. For the positive electrode mixture, a mixture of a lithium-containing composite oxide as a positive electrode active material, graphite as a conductive agent, and polyvinylidene fluoride (PVDF) as a binder was used. $LiNi_{0.88}Co_{0.09}Al_{0.03}O_2$ was used as the lithium-containing composite oxide. In the positive electrode mixture, the mass ratio between the lithium-containing composite oxide, graphite, and PVDF was set to 100:1:0.9.

The positive electrode slurry was applied to both surfaces of an aluminum foil (thickness: 15 μm) as a current collector, and the coating film was dried and rolled to form a positive electrode active material layer (density: 3.6 g/$cm^3$) to obtain a positive electrode. A doctor blade method was used to apply the positive electrode slurry.

[Nonaqueous Electrolyte Preparation]

A nonaqueous electrolyte was prepared by adding ethylene sulfite (ES) and vinylene carbonate (VC) as sulfite compounds to a nonaqueous solvent obtained by mixing ethylene carbonate (EC) and dimethyl carbonate (DMC) in a volume ratio of 1:3, and dissolving $LiPF_6$. The nonaqueous electrolyte contained 1 mass% of ES relative to the entirety of the nonaqueous electrolyte. The nonaqueous electrolyte contained 5 mass% of VC relative to the entirety of the nonaqueous electrolyte. The nonaqueous electrolyte had a $LiPF_6$ concentration of 1.5 mol/L.

[Nonaqueous Electrolyte Secondary Battery Production]

An aluminum positive electrode lead was attached to the exposed part of the positive electrode current collector of the positive electrode, and a nickel-made negative electrode lead was attached to the exposed part of the negative

electrode current collector of the negative electrode. Thereafter, the positive electrode and the negative electrode were wound with a separator interposed to produce an electrode group of the winding type. A microporous membrane made of polyethylene was used as the separator. The electrode group was placed in a battery case. At this time, on the top and bottom of the electrode group, an upper insulating plate and a lower insulating plate made of resin were arranged, respectively. A negative electrode lead was welded to the inner bottom surface of a battery case. A positive electrode lead was welded to a metallic sealing member which also serves as a positive electrode terminal. Thereafter, the nonaqueous electrolyte was injected into the battery case, and the opening of the battery case was closed using the sealing member. At this time, a resin-made gasket was interposed between the open end of the battery case and the sealing member. In this way, a cylindrical nonaqueous electrolyte secondary battery (nominal capacity of 4600 mAh) was obtained.

The batteries produced above were evaluated as below.

[Evaluation 1: Measuring capacity retention rates A and B at Low-Rate Cycles]

Under an environment of 25°C, after performing constant current charging at a current of 0.3 C (1380 mA) until the voltage was 4.2 V, constant voltage charging was performed at a voltage of 4.2 V until the current was 0.02 C. After a 10 minute pause, constant current discharging was performed at a constant current of 0.5 C until the voltage was 2.5 V. Setting the above as one cycle, a set of charge and discharge was performed 200 cycles, and the discharge capacity of the first cycle, the 20th cycle, and the 200th cycle was determined. The capacity retention rate A (%) at 20th cycle was determined based on the following formula and the initial cycle characteristics were evaluated.

$$\text{Capacity retention rate A} = (\text{Discharge capacity of the 20th cycle}/\text{Discharge capacity of the 1st cycle}) \times 100$$

The capacity retention rate B (%) at the 200th cycle was obtained based on the following formula, and the mid-term cycle characteristics were evaluated.

$$\text{Capacity retention rate B}=(\text{discharge capacity at the 200th cycle}/\text{discharge capacity at the 1st cycle}) \times 100$$

[Evaluation 2: Measuring capacity retention rate C at High-Rate Cycles]

Under an environment of 25 °C, after performing constant current charging at a current of 0.7C (3220mA) until the voltage was 4.2V, constant voltage charging was performed at a voltage of 4.2V until the current was 0.02C. After a 10 minute pause, constant current discharging was performed at a constant current of 0.5C until the voltage was 2.5V. Setting the above as one cycle, a set of charge and discharge was performed 75 cycles. Capacity retention rate C (%) was determined based on the following formula to evaluate the high rate characteristics.

$$\text{Capacity retention rate C} = (\text{Discharge capacity at 75th cycle}/\text{Discharge capacity at 1st cycle}) \times 100$$

<Example 2>

A nonaqueous electrolyte secondary battery was produced and evaluated in the same manner as in Example 1, except that ethylene sulfate (DTD) was used as the sulfate compound instead of ES.

<Example 3>

A nonaqueous electrolyte secondary battery was produced and evaluated in the same manner as in Example 1, except that the ES content in the nonaqueous electrolyte was 0.5 mass% relative to the entirety of the nonaqueous electrolyte.

<Comparative Example 1>

A negative electrode slurry was applied on both surfaces of the negative electrode current collector, and the coating film was dried and rolled to form a negative electrode active material layer on both surfaces of the negative electrode current collector to obtain a negative electrode. Only the second negative electrode slurry was used for the negative electrode slurry, and the negative electrode active material layer was composed only of the second negative electrode active material layer. The coating amount of the negative electrode slurry was set to be the same as the coating amount of a sum of the first negative electrode slurry and the second negative electrode slurry of Example 1. The thickness of the negative electrode active material layer was set to be the same as the thickness of a sum of the first negative electrode active material layer and the second negative electrode active material layer of Example 1.
Furthermore, the nonaqueous electrolyte did not contain ES.
Except for the above, a nonaqueous electrolyte secondary battery was produced and evaluated in the same manner as in Example 1.

<Comparative Example 2>

A nonaqueous electrolyte secondary battery was produced and evaluated in the same manner as in Example 1, except that the negative electrode of Comparative Example 1 in which the negative electrode active material layer was composed only of the second negative electrode active material layer was used.

<Comparative Example 3>

A nonaqueous electrolyte secondary battery was produced and evaluated in the same manner as in Example 1, except that the nonaqueous electrolyte contained no ES.
The evaluation results are shown in Table 1.

[Table 11

| | Negative Electrode | | Nonaqueous Electrolyte | | Evaluation on Initial Cycle Characteristics | Evaluation on Mid Cycle Characteristics | Evaluation on High Rate Characteristics |
|---|---|---|---|---|---|---|---|
| | Negative Electrode Active Material Layer | M2/M1 | Additive | Additive Content (mass%) | Capacity Retention Rate A At 20th cycle (%) | Capacity Retention Rate B At 200th cycle (%) | Capacity Retention Rate C (%) |
| Comp. Ex.1 | Single Layer | 1 | - | - | 98.2 | 81.7 | 79.4 |
| Comp. Ex.2 | Single Layer | 1 | ES | 1 | 98.3 | 82.4 | 79.8 |
| Comp. Ex.3 | Two Layers | 0.63 | - | - | 98.0 | 83.0 | 83.2 |
| Example 1 | Two Layers | 0.63 | ES | 1 | 98.8 | 83.6 | 83.7 |
| Example 2 | Two Layers | 0.63 | DTD | 1 | 98.8 | 83.5 | 83.8 |
| Example 3 | Two Layers | 0.63 | ES | 0.5 | 98.7 | 83.3 | 83.5 |

In the batteries of Examples 1 and 3, the first region contained more silicon material than the second region, and the nonaqueous electrolyte contained ES as the sulfite compound, and initial cycle characteristics and high rate characteristics improved. In the batteries of Example 2, the first region contained more silicon material than the second region, and the nonaqueous electrolyte contained DTD as the sulfate compound, and initial cycle characteristics and high rate characteristics improved. In the batteries of Examples 1 to 3, mid cycle characteristics were also improved.
In the batteries of Comparative Examples 1 and 2, since the negative electrode active material layer was

composed of a single layer, the high rate characteristics were lowered. In the batteries of Comparative Example 3, in which the first region contained more silicon material than the second region, the high rate characteristics were improved compared with the batteries of Comparative Example 1, but the initial-cycle characteristics were lowered compared with the batteries of Comparative Example 1 because the nonaqueous electrolyte contained no additive.

[Industrial Applicability]

The nonaqueous electrolyte secondary battery according to the present disclosure is suitably used, for example, in applications in which excellent cycle characteristics and high rate characteristics are required.

[Reference Signs List]

1 Electrode group
2 Positive electrode lead
3 Negative electrode lead
4 Battery case
5 Sealing plate
6 Negative electrode terminal
7 Gasket
8 Sealing plug
11 Negative electrode current collector
12 Negative electrode mixture layer
12a first region
12b second region

## Claims

1. A nonaqueous electrolyte secondary battery comprising a positive electrode, a negative electrode, and a nonaqueous electrolyte, wherein

    the negative electrode comprises a negative electrode current collector, and a negative electrode active material layer supported by the negative electrode current collector and containing a silicon material as a negative electrode active material, and
    when dividing the negative electrode active material layer into two layers of a first region and a second region having a same thickness, the second region is closer to the negative electrode current collector than the first region,
    the silicon material is contained in the first region more than the second region; and the nonaqueous electrolyte includes at least one additive selected from the group consisting of a sulfite compound and a sulfate compound.

2. The nonaqueous electrolyte secondary battery of Claim 1, wherein a content M1 of the silicon material in the first region and a content M2 of the silicon material in the second region satisfies a relation $0 \leq M2/M1 < 1$.

3. The nonaqueous electrolyte secondary battery of Claim 2, wherein the M2/M1 is 0.5 or more and 0.9 or less.

4. The nonaqueous electrolyte secondary battery of any one of Claims 1 to 3, wherein the silicon material includes a composite material including a lithium ion conductive phase and silicon particles dispersed in the lithium ion conductive phase, and
    the lithium ion conductive phase includes at least one selected from the group consisting of a $SiO_2$ phase, a silicate phase, and a carbon phase.

5. The nonaqueous electrolyte secondary battery of any one of Claims 1 to 4, wherein the additive includes at least one selected from the group consisting of ethylene sulfite and ethylene sulfate.

6. The nonaqueous electrolyte secondary battery of any one of Claims 1 to 5, wherein a content of the additive in the nonaqueous electrolyte is 0.5 mass% or more and 2 mass% or less relative to an entirety of the nonaqueous electrolyte.

[FIG. 1]

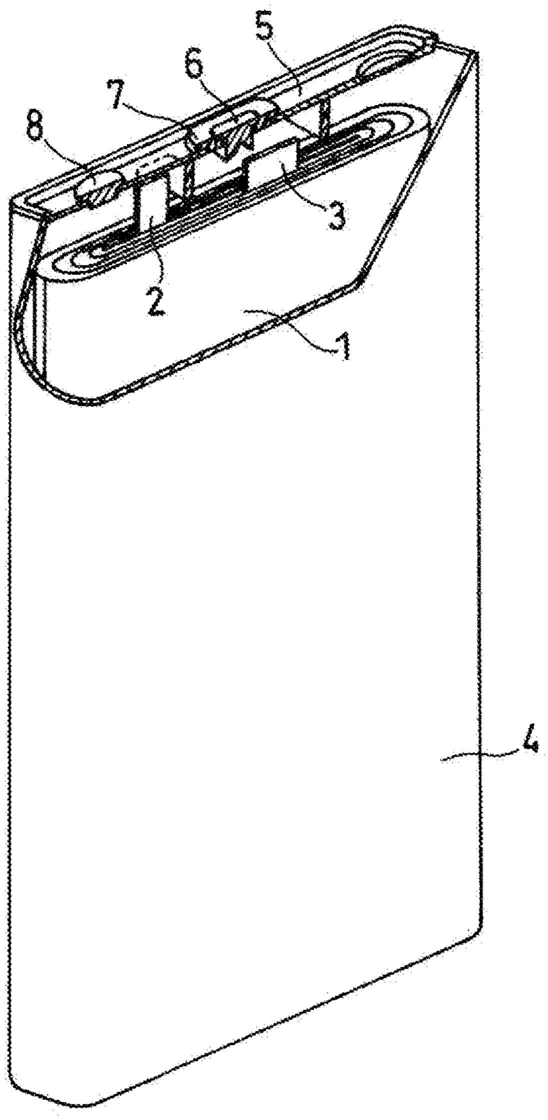

[FIG. 2]

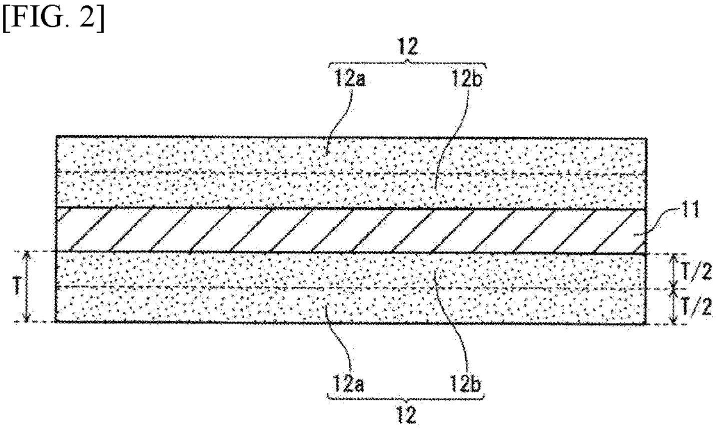

## INTERNATIONAL SEARCH REPORT

International application No.
PCT/JP2020/044687

A. CLASSIFICATION OF SUBJECT MATTER
H01M 4/134(2010.01)i; H01M 4/36(2006.01)i; H01M 4/38(2006.01)i; H01M 10/052(2010.01)i; H01M 10/0567(2010.01)i
FI: H01M10/052; H01M10/0567; H01M4/134; H01M4/36 A; H01M4/38 Z
According to International Patent Classification (IPC) or to both national classification and IPC

B. FIELDS SEARCHED

Minimum documentation searched (classification system followed by classification symbols)
H01M4/134; H01M4/36; H01M4/38; H01M10/052; H01M10/0567

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2015/115051 A1 (SANYO ELECTRIC CO., LTD.) 06 August 2015 (2015-08-06) paragraphs [0023], [0030], claims | 1-6 |
| Y | JP 2005-285563 A (SANYO ELECTRIC CO., LTD.) 13 October 2005 (2005-10-13) claims, paragraphs [0008]-[0010] | 1-6 |
| Y | WO 2016/121326 A1 (SANYO ELECTRIC CO., LTD.) 04 August 2016 (2016-08-04) paragraphs [0002]-[0006], claims | 4 |
| A | JP 2014-120330 A (SANYO ELECTRIC CO., LTD.) 30 June 2014 (2014-06-30) claims | 1-6 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 January 2021 (29.01.2021) | 09 February 2021 (09.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application no.
PCT/JP2020/044687

| Patent Documents referred in the Report | Publication Date | Patent Family | Publication Date |
|---|---|---|---|
| WO 2015/115051 A1 | 06 Aug. 2015 | US 2016/0351892 A1 paragraphs [0026], [0033], claims<br>CN 106030864 A | |
| JP 2005-285563 A | 13 Oct. 2005 | (Family: none) | |
| WO 2016/121326 A1 | 04 Aug. 2016 | US 2017/0352881 A1 paragraphs [0002]-[0009], claims<br>CN 107112521 A | |
| JP 2014-120330 A | 30 Jun. 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015069760 A